# DEMANDE DE BREVET EUROPEEN

(11) **EP 3 107 048 A1**
(43) Date de publication de la demande: **21.12.2016**
(21) Numéro de dépôt: 16174781.1
(22) Date de dépôt: 16.06.2016
(51) Int. Cl.: G06Q 10/06

(54) **DISPOSITIF ET PROCÉDÉ D'AFFECTATION AUTOMATIQUE À DES PERSONNES DE TICKETS REPRÉSENTATIFS DE DEMANDE(S) À TRAITER, EN FONCTION DE CRITÈRES**

(30) Priorité: 18.06.2015 FR 1555575
(71) Demandeur: Bull S.A.S., 78340 Les Clayes-sous-Bois (FR)
(72) Inventeur: FOROT, Julien, 38000 Grenoble (FR); RADANLIEV, Martin, 38000 Grenoble (FR); VERCHERE, Antoine, 38600 Fontaine (FR)
(74) Mandataire: Cabinet Camus Lebkiri

(57) **Abrégé**

Un dispositif (DA) est destiné à affecter automatiquement à des personnes des tickets représentatifs chacun d'au moins une demande à traiter. Ce dispositif (DA) comprend des moyens de stockage (MS) stockant des identifiants de personnes en correspondance de valeurs de critères choisis dans une liste et représentatives de ces personnes, et des moyens d'analyse (MA) agencés, en cas de réception d'un ticket comprenant des valeurs de critères choisis dans cette liste, pour déterminer dans les moyens de stockage (MS) au moins un identifiant de personne stocké en correspondance de valeurs qui sont compatibles avec des valeurs d'au moins un critère choisi du ticket reçu, puis pour affecter ce ticket reçu à la personne associée à l'identifiant de personne déterminé.

## Description

L'invention concerne le domaine du suivi des tickets qui sont représentatifs de demandes à traiter, et plus précisément l'automatisation des affectations de tels tickets à des personnes qui sont les plus aptes à traiter les demandes qu'ils représentent.

On entend ici par « ticket », un ensemble d'informations permettant de décrire au moins une demande à traiter (comme par exemple un problème détecté en vue de le résoudre (ou de le corriger), ou une demande d'évolution d'un logiciel ou d'une partie au moins d'un système d'informations (par exemple une partie de l'infrastructure et/ou un ensemble de logiciel(s)/ERP)). Par ailleurs, une demande peut être une anomalie technique, ou relative au respect de règles de gestion, ou encore fonctionnelle (besoin d'amélioration ou de nouvelle fonctionnalité). A titre d'exemples illustratifs, une demande non critique peut être une page Internet (ou web) ayant une image qui ne s'affiche pas à la bonne taille, et une demande critique peut être un accès à une page Internet (ou web) qui empêche l'utilisation de tout un site.

Comme le sait l'homme de l'art, il existe des outils (appelés en anglais « issue tracking system ») qui permettent d'aider les utilisateurs et les développeurs à améliorer la qualité d'un logiciel ou d'un système. Les utilisateurs soumettent des demandes d'assistance à l'outil pour signaler, par exemple, des problèmes rencontrés aux développeurs de logiciels ou aux mainteneurs de systèmes qu'ils utilisent, et éventuellement demander leur résolution. Chaque demande d'assistance est transformée par l'outil en un ticket représentatif d'au moins une demande (éventuellement un problème).

L'outil permet également aux utilisateurs qui ont effectué des demandes d'assistance de suivre les tickets correspondants qui ont été pris en charge par (ou affectés à) des personnes chargées de traiter les demandes qu'ils représentent. C'est par exemple le cas des outils appelés MANTIS BT® et JIRA®. Chaque ticket peut être associé à une information de correction si il est relatif à une demande qu'il est urgent de traiter, ou à une fin de non-recevoir si il est relatif à un problème (ou défaut) qui n'en est pas un, ou à une date probable de correction si il est relatif à un problème (ou défaut) qu'il n'est pas urgent de résoudre ou dont la résolution est différée. Par ailleurs, chaque ticket est généralement affecté d'un indicateur de degré d'urgence de résolution (critique, urgent, normal, non urgent) qui est fourni par l'utilisateur qui a effectué la demande d'assistance correspondante, et qui peut être modifié par un administrateur.

Certains des outils précités peuvent même être intégrés dans d'autres applications de suivi de projet logiciel, ou de gestion de code source, ou d'intégration continue, ou bien dans des outils de gestion de planning.

Cependant, l'affectation des tickets aux personnes qui sont les plus aptes à traiter les demandes qu'ils représentent nécessite actuellement une intervention humaine en fonction de critères tels que la disponibilité (ou présence) et les compétences des personnes, la criticité des demandes à traiter ou la charge prévisionnelle. On comprendra que plus le nombre de personnes (pouvant traiter des demandes au sein d'une entreprise) est élevé, plus l'affectation manuelle est difficile, fastidieuse et chronophage. De plus, plus le nombre de critères d'affectation est élevé, plus l'affectation manuelle est difficile, fastidieuse et chronophage.

L'invention a notamment pour but d'améliorer la situation, et plus précisément de permettre d'affecter automatiquement des tickets à des personnes pertinentes (experts ou spécialistes) en fonction de critères choisis.

Elle propose notamment à cet effet un dispositif, destiné à affecter à des personnes des tickets représentatifs chacun d'au moins une demande à traiter, et comprenant :
- des moyens de stockage agencés pour stocker des identifiants de personnes en correspondance de valeurs de critères choisis dans une liste et représentatives de ces personnes, et
- des moyens d'analyse agencés, en cas de réception d'un ticket comprenant des valeurs de critères choisis dans cette liste, pour déterminer dans les moyens de stockage au moins un identifiant de personne stocké en correspondance de valeurs qui sont compatibles avec des valeurs d'au moins un critère choisi du ticket reçu, puis pour affecter ce ticket reçu à la personne associée à cet identifiant de personne déterminé.

Par exemple, les moyens d'analyse peuvent être également agencés, lorsqu'ils ont déterminé plusieurs identifiants de personne, pour sélectionner celui qui possède le plus grand nombre de valeurs compatibles avec les valeurs des critères choisis du ticket reçu, puis pour affecter le ticket reçu à la personne associée à cet identifiant de personne sélectionné.

Egalement par exemple, les critères peuvent être choisis parmi (au moins) un domaine de compétence, une expérience de traitement de demande, une préférence, une disponibilité, une charge de travail, un domaine de demande, un degré de criticité de demande, une date de résolution de demande, et une charge de travail estimée.

L'invention propose également un équipement comprenant des moyens de traitement, un module de communication propre à être connecté à au moins un réseau de communication, et un dispositif d'affectation de tickets du type de celui présenté ci-avant.

Un tel équipement peut, par exemple, être agencé sous la forme d'un serveur.

L'invention propose également un procédé, destiné à permettre l'affectation de tickets, représentatifs chacun d'au moins une demande à traiter, à des personnes, et comprenant :
- une première étape dans laquelle, en présence d'un ticket comprenant des valeurs de critères choisis dans une liste, on détermine de façon automatisée parmi des identifiants de personnes stockés en correspondance de valeurs de critères choisis dans cette liste et représentatives de ces personnes, au moins un identifiant de personne stocké en correspondance de valeurs qui sont compatibles avec des valeurs d'au moins un critère choisi de ce ticket reçu, et
- une seconde étape dans laquelle on affecte le ticket reçu à la personne associée à l'identifiant de personne déterminé, puis on informe cette personne de l'affectation de ce ticket.

Le procédé selon l'invention peut comporter d'autres caractéristiques qui peuvent être prises séparément ou en combinaison, et notamment :
- dans la première étape, lorsque l'on a déterminé plusieurs identifiants de personne, on peut sélectionner celui qui possède le plus grand nombre de valeurs compatibles avec les valeurs des critères choisis du ticket reçu, et dans la seconde étape on peut affecter le ticket reçu à la personne associée à cet identifiant de personne sélectionné ;
- les critères peuvent être choisis parmi (au moins) un domaine de compétence, une expérience de traitement de demande, une préférence, une disponibilité, une charge de travail, un domaine de demande, un degré de criticité de demande, une date de résolution de demande, et une charge de travail estimée ;
- dans la seconde étape on peut informer la personne de l'affectation du ticket reçu au moyen d'au moins un message choisi parmi (au moins) un message court (ou SMS), un courriel (ou e-mail), et un message produit par toute autre méthode de type « push ».

L'invention propose également un produit programme d'ordinateur comprenant un jeu d'instructions qui, lorsqu'il est exécuté par des moyens de traitement, est propre à mettre en oeuvre un procédé d'affectation de tickets du type de celui présenté ci-avant pour affecter à des personnes, de façon automatisée, des tickets représentatifs chacun d'au moins une demande à traiter.

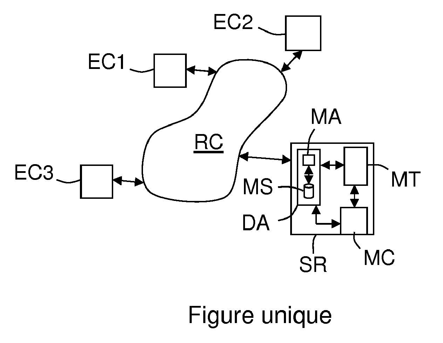

D'autres caractéristiques et avantages de l'invention apparaîtront à l'examen de la description détaillée ci-après, et du dessin annexé, sur lequel l'unique figure illustre de façon schématique et fonctionnelle un équipement de réseau équipé d'un exemple de réalisation d'un dispositif d'affectation de tickets selon l'invention et couplé à un réseau de communication auquel sont également couplés des équipements communicants d'usagers.

L'invention a notamment pour but de proposer un dispositif d'affectation de tickets DA, et un procédé associé, destinés à permettre l'affectation automatique de tickets à des personnes (spécialistes ou experts).

On a schématiquement et fonctionnellement illustré sur l'unique figure un réseau de communication RC auquel sont couplés des équipements communicants SR et ECj. L'équipement communicant SR est équipé d'un exemple de réalisation non limitatif d'un dispositif d'affectation de tickets DA selon l'invention. Dans ce qui suit, on considère, à titre d'exemple non limitatif, que l'équipement communicant SR est un équipement de réseau, tel qu'un serveur Internet (ou web). Mais l'invention n'est pas limitée à ce type d'équipement communicant. En effet, un dispositif d'affectation de tickets DA peut être installé dans n'importe quel équipement communicant SR comprenant au moins des moyens de traitement (ou CPU (« Computer Processing Unit »)) MT et un module de communication MC propre à être connecté à au moins un réseau de communication RC. Ainsi, il pourrait également s'agir d'un ordinateur fixe ou portable ou d'une machine virtualisée proposant un module de communication, par exemple.

Les autres équipements communicants référencés ECj appartiennent à des usagers de logiciels. Il s'agit d'équipements électroniques disposant notamment d'une interface homme/machine, comme par exemple un clavier (éventuellement tactile), d'un écran d'affichage, et d'un module de communication pouvant être connecté à un réseau de communication filaire et/ou à un réseau de communication non filaire. Dans l'exemple illustré non limitativement, le nombre d'équipements communicants ECj est égal à trois (j = 1 à 3). Mais ce nombre peut prendre n'importe quelle valeur supérieure ou égale à un (1). Par exemple, ces équipements communicants ECj sont des ordinateurs individuels. Mais cela n'est pas obligatoire. Il pourrait s'agir également d'ordinateurs portables (ou « laptops ») ou de tablettes électroniques ou encore de téléphones intelligents (ou « smartphones »), par exemple.

Le réseau de communication RC comprend, par exemple, une infrastructure de communication filaire à laquelle peuvent se connecter des équipements communicants SR et ECj. Mais il pourrait ne comprendre qu'une infrastructure de communication non filaire, ou bien à la fois une infrastructure de communication filaire et une infrastructure de communication non filaire. Il pourrait également représenter un ensemble de réseaux de communication participant à l'Internet.

Comme illustré, un dispositif (d'affectation de tickets) DA, selon l'invention, comprend au moins des moyens de stockage MS et des moyens d'analyse MA.

Les moyens de stockage MS sont agencés pour stocker des identifiants de personnes (spécialistes ou experts chargés de traiter des demandes) en correspondance de valeurs de critères choisis dans une liste et représentatives de ces personnes.

On entend ici par « demande » un problème détecté (comme par exemple une anomalie technique ou relative au respect de règles de gestion), ou une demande d'évolution fonctionnelle (comme par exemple un besoin d'amélioration ou de nouvelle fonctionnalité(s) d'un logiciel ou d'une partie au moins d'un système d'informations).

Par exemple, les critères peuvent être choisis parmi au moins un domaine de compétence, une expérience de traitement de demande, une préférence, une disponibilité, une charge de travail, un domaine de demande, un degré de criticité de demande, une date de traitement de demande, et une charge de travail estimée. On notera que dans la liste non exhaustive qui précède le domaine de compétence, l'expérience de traitement de demande, la préférence, la disponibilité et la charge de travail concernent plus précisément les personnes chargées de traiter les demandes, et le domaine de demande, le degré de criticité de demande, la date de traitement de demande, et la charge de travail estimée concernent plus précisément les tickets (et donc les demandes qu'ils concernent).

Par exemple, les valeurs que peut prendre le degré de criticité de demande peuvent être représentatives du caractère « critique », « urgent », « normal » ou « non urgent ».

Egalement par exemple, les valeurs que peut prendre le domaine de demande peuvent être représentatives de la (ou d'une) technique, ou d'un respect de règle(s) de gestion, ou d'un besoin d'amélioration, ou encore d'un besoin d'une nouvelle fonctionnalité.

Les moyens de stockage MS peuvent être agencés sous la forme d'une mémoire ou d'une base de données, éventuellement de type logiciel (comme par exemple un annuaire LDAP (« Lightweight Directory Access Protocol »)).

Les informations (valeurs et identifiants) stocké(e)s dans les moyens de stockage MS sont fourni(e)s par un administrateur. Elles sont mises à jour très régulièrement, et de préférence, chaque fois que survient une modification relative à une personne (en particulier ses domaines de compétence, ses expériences de traitement de demande, sa disponibilité et sa charge de travail).

Les moyens d'analyse MA sont chargés d'intervenir chaque fois que leur dispositif DA reçoit un ticket comprenant des valeurs de critères choisis dans la liste précitée. Chaque ticket émane, par exemple, d'un logiciel (ou outil) de suivi qui est installé dans un équipement communicant ECj d'un usager, et est transmis au serveur SR via le réseau de communication RC. Par ailleurs, chaque ticket est représentatif d'au moins une demande à traiter.

Lorsque les moyens d'analyse MA reçoivent un tel ticket, ils sont agencés pour déterminer dans les moyens de stockage MS au moins un identifiant de personne stocké en correspondance de valeurs qui sont compatibles avec des valeurs d'au moins un critère choisi du ticket reçu. Puis, ils (MA) affectent ce ticket reçu à la personne qui est associée à cet identifiant de personne déterminé.

A titre d'exemple purement illustratif, un ticket reçu peut comporter des valeurs de domaine de demande, de degré de criticité de demande, de date de traitement de demande et de charge de travail estimée, et les moyens d'analyse MA peuvent être chargés de déterminer la personne ayant un identifiant associé à des valeurs compatibles avec au moins les domaine de demande, degré de criticité de demande et charge de travail estimée de ce ticket.

Les moyens d'analyse MA peuvent, par exemple, être agencés sous la forme de modules logiciels (ou informatiques (ou encore « software »)). Mais dans une variante de réalisation ils pourraient être réalisés sous la forme d'une combinaison de modules logiciels et de circuits électroniques (ou « hardware »). On notera que lorsque les moyens de stockage MS et les moyens d'analyse MA sont tous agencés sous la forme de modules logiciels, ils constituent un produit programme d'ordinateur comprenant un jeu d'instructions exécutable par des moyens de traitement MT de type circuits électroniques du serveur SR.

Par exemple, les moyens d'analyse MA peuvent être également agencés, lorsqu'ils ont déterminé plusieurs identifiants de personne, pour sélectionner celui qui possède le plus grand nombre de valeurs compatibles avec les valeurs des critères choisis du ticket reçu, puis pour affecter le ticket reçu à la personne qui est associée à cet identifiant de personne sélectionné. On notera qu'une telle situation peut généralement survenir lorsque le nombre de personnes chargées de traiter une même demande est important et/ou lorsque le nombre de critères discriminants est petit.

En variante, lorsque les moyens d'analyse MA ont déterminé plusieurs identifiants de personne, ils peuvent sélectionner l'une d'entre elles en fonction d'un critère alphabétique ou tout autre critère discriminant permettant de sélectionner un identifiant de personne unique (comme par exemple la plus petite valeur de l'identifiant technique).

On notera que les moyens d'analyse MA peuvent être également et éventuellement agencés pour ordonner au serveur SR de transmettre à un équipement de communication de la personne déterminée (ou sélectionnée) au moins un message destiné à l'informer de l'affectation d'un ticket. Chaque message peut, par exemple, être un message court (ou SMS) ou un courriel (ou e-mail) ou un message produit par toute autre méthode de type « push » (par exemple un message via un réseau social).

Il est important de noter que l'invention peut être également considérée sous l'angle d'un procédé d'affectation de tickets, pouvant être notamment mis en oeuvre au moyen d'un dispositif DA du type de celui présenté ci-avant. Les fonctionnalités offertes par la mise en oeuvre du procédé selon l'invention étant quasiment identiques à celles offertes par le dispositif DA présenté ci-avant, seule la combinaison de fonctionnalités principales offerte par le procédé est présentée ci-après.

Ce procédé d'affectation de tickets comprend des première et seconde étapes.

Dans la première étape, lorsqu'un ticket comprenant des valeurs de critères choisis dans une liste a été reçu, on (le dispositif DA) détermine de façon automatisée parmi des identifiants de personnes stockés en correspondance de valeurs de critères choisis dans cette liste et représentatives de ces personnes, au moins un identifiant de personne stocké en correspondance de valeurs qui sont compatibles avec des valeurs d'au moins un critère choisi du ticket reçu.

Dans la seconde étape, on affecte le ticket reçu à la personne associée à l'identifiant de personne déterminé, puis on (le dispositif DA et le serveur SR) informe(nt) cette personne de l'affectation de ce ticket, par exemple au moyen d'au moins un message court ou d'un courriel.

Grâce à l'invention, on peut désormais affecter les tickets de façon totalement automatique (sans la moindre intervention d'un administrateur) aux personnes qui sont les mieux à même de traiter les demandes qu'ils représentent respectivement.

L'invention ne se limite pas aux modes de réalisation de dispositif d'affectation de tickets, d'équipement communicant, et de procédé d'affectation de tickets décrits ci-avant, seulement à titre d'exemple, mais elle englobe toutes les variantes que pourra envisager l'homme de l'art dans le seul cadre des revendications ci-après.

## Revendications

1. Dispositif (DA) d'affectation à des personnes de tickets représentatifs chacun d'au moins une demande à traiter, **caractérisé en ce qu'**il comprend des moyens de stockage (MS) agencés pour stocker des identifiants de personnes en correspondance de valeurs de critères choisis dans une liste et représentatives de ces personnes, et des moyens d'analyse (MA) agencés, en cas de réception d'un ticket comprenant des valeurs de critères choisis dans ladite liste, pour déterminer dans lesdits moyens de stockage (MS) au moins un identifiant de personne stocké en correspondance de valeurs qui sont compatibles avec des valeurs d'au moins un critère choisi dudit ticket reçu, puis pour affecter ledit ticket reçu à la personne associée audit identifiant de personne déterminé.

2. Dispositif selon la revendication 1, **caractérisé en ce que** lesdits moyens d'analyse (MA) sont agencés, lorsqu'ils ont déterminé plusieurs identifiants de personne, pour sélectionner celui qui possède le plus grand nombre de valeurs compatibles avec les valeurs desdits critères choisis dudit ticket reçu, puis pour affecter ledit ticket reçu à la personne associée audit identifiant de personne sélectionné.

3. Dispositif selon l'une des revendications 1 et 2, **caractérisé en ce que** lesdits critères sont choisis dans un groupe comprenant un domaine de compétence, une expérience de traitement de demande, une préférence, une disponibilité, une charge de travail, un domaine de demande, un degré de criticité de demande, une date de traitement de demande, et une charge de travail estimée.

4. Equipement communiquant (SR) comprenant des moyens de traitement (MT) et un module de communication (MCN) propre à être connecté à au moins un réseau de communication (RC), **caractérisé en ce qu'**il comprend en outre un dispositif d'affectation de tickets (DA) selon l'une des revendications 1 à 3.

5. Equipement selon la revendication 4, **caractérisé en ce qu'**il est agencé sous la forme d'un serveur.

6. Procédé d'affectation à des personnes de tickets représentatifs chacun d'au moins une demande à traiter, **caractérisé en ce qu'**il comprend une première étape dans laquelle, en présence d'un ticket comprenant des valeurs de critères choisis dans une liste, on détermine de façon automatisée parmi des identifiants de personnes stockés en correspondance de valeurs de critères choisis dans ladite liste et représentatives de ces personnes, au moins un identifiant de personne stocké en correspondance de valeurs qui sont compatibles avec des valeurs d'au moins un critère choisi dudit ticket reçu, et une seconde étape dans laquelle on affecte ledit ticket reçu à la personne associée audit identifiant de personne déterminé, puis on informe cette personne de l'affectation dudit ticket.

7. Procédé selon la revendication 6, **caractérisé en ce que** dans ladite première étape, lorsque l'on a déterminé plusieurs identifiants de personne, on sélectionne celui qui possède le plus grand nombre de valeurs compatibles avec les valeurs desdits critères choisis dudit ticket reçu, et dans ladite seconde étape on affecte à la personne associée audit identifiant de personne sélectionné ledit ticket reçu.

8. Procédé selon l'une des revendications 6 et 7, **caractérisé en ce que** lesdits critères sont choisis dans un groupe comprenant un domaine de compétence, une expérience de traitement de demande, une préférence, une disponibilité, une charge de travail, un domaine de demande, un degré de criticité de demande, une date de traitement de demande, et une charge de travail estimée.

9. Procédé selon l'une des revendications 6 à 8, **caractérisé en ce que** dans ladite seconde étape on informe ladite personne de l'affectation dudit ticket au moyen d'au moins un message choisi dans un groupe comprenant un message court, un courriel, et un message produit par toute méthode de type « push ».

10. Produit programme d'ordinateur comprenant un jeu d'instructions qui, lorsqu'il est exécuté par des moyens de traitement, est propre à mettre en oeuvre le procédé d'affectation de tickets selon l'une des revendications 6 à 9 pour affecter à des personnes, de façon automatisée, des tickets représentatifs chacun d'au moins une demande à traiter.
